# EUROPEAN PATENT SPECIFICATION

(11) **EP 2 124 285 B1**
(45) Date of publication and mention of the grant of the patent: **30.10.2013**
(21) Application number: 08721619.8
(22) Date of filing: 07.03.2008
(51) Int. Cl.: H01M 10/04, H01M 2/26

(54) **WOUND TYPE ELECTRODE BATTERY, AND ITS MANUFACTURING METHOD**
GEWICKELTE ELEKTRODENBATTERIE UND HERSTELLUNGSVERFAHREN DAFÜR
BATTERIE D'ÉLECTRODE DE TYPE ENROULÉ ET SON PROCÉDÉ DE FABRICATION

(30) Priority: 12.03.2007 JP 2007062589
(43) Date of publication of application: 25.11.2009
(73) Proprietor: Kabushiki Kaisha Toshiba, Minato-ku Tokyo 105-8001 (JP)
(72) Inventor: Shinichiro Kosugi Toshiba Corporation I.P.D, Tokyo 105-8001 (JP)
(74) Representative: Henkel, Breuer & Partner
(86) International application number: PCT/JP2008/054202
(87) International publication number: WO 2008/126538

(56) References cited:
- EP-A2- 1 207 565
- JP-A- 8 022 818
- JP-A- 58 214 273
- JP-A- 2000 348 757
- JP-A- 2002 008 708
- JP-A- 2002 157 991
- JP-A- 2002 175 813

## Description

### Technical Field

The present invention relates to a rolled electrode battery, including an electrode body formed by rolling band-shaped positive and negative electrode plates into a flat shape with a separator therebetween, and a method of manufacturing the rolled electrode battery.

### Background Art

With the recent increase of interest in environmental problems, the development of electric vehicles and hybrid electric vehicles has been advanced and attracting public attention. Batteries used in these electric vehicles require the ability to supply high output power to drive the vehicles, that is, to perform high-current discharge.

A battery as a power supply for conventional mobile equipment is improved in performance by using a rolled electrode body that is formed by rolling sheet-shaped electrode positive and negative electrode plates with a separator between them. Rolled electrode bodies for this purpose include a cylindrical rolled electrode body that is rolled into a spiral cylinder and a rolled electrode body that is rolled into a flat cube.

Conventionally, a battery with a rolled electrode body is provided with an outer case, and the rolled electrode body is sealed together with an electrolyte solution in the outer case. Electric power is extracted from the rolled electrode body through electrode terminals that are connected to the positive electrode plate and the negative electrode plate, individually. Another method of electric power extraction is proposed in which an electric current is extracted by, for example, fitting electrode plates individually with tabs and bonding these tabs to electrode terminals.

However, it is difficult to apply a battery in which electric power is extracted from the electrode body through the tabs to an electric vehicle. Specifically, a battery for an electric vehicle requires a large current. When a large current flows through a battery of this type, overheating/burning may be caused at junctions of the tabs. In order to extract a large current, therefore, it is necessary to provide each electrode plate with a large number of tabs.

A battery disclosed in, for example, Jpn. Pat. Appln. KOKAI Publication No. 2002-8708, as a battery having a structure for extracting a large current, includes a rolled electrode body, a positive electrode terminal, and a negative electrode terminal. The rolled electrode battery is formed by rolling band-shaped positive and negative electrode plates, each coated with an electrode active material, with a band-shaped separator between them. Shaft portions of the positive and negative electrode terminals are connected to the positive and negative electrode plates, respectively, of the electrode body. The positive electrode plate and the negative electrode plate each include a band-shaped region to which the electrode active material is coated, and a side edge portion to which the electrode active material is not applied. The electrode plates are rolled with their side edge portions projecting in opposite directions in the axis of the electrode body. Thus, the electrode body is provided with regions to which no electrode material is coated at its axially opposite end portions, individually. The positive electrode terminal and the negative electrode terminal are connected to these regions and situated at the axially opposite end portions of the electrode body.

The aforementioned tabs are fixed to surfaces of the electrode plates by welding. If a large number of tabs are configured to be fixed to the electrode plates, therefore, the tabs require a troublesome mounting operation, the overall thickness of the electrode body is increased, and the battery is large-sized.

In the battery disclosed in Jpn. Pat. Appln. KOKAI Publication No. 2002-8708, the regions to which no electrode material is applied and the positive and negative electrode terminals are provided at the axially opposite end portions of the electrode body. Accordingly, the axial dimension of the entire electrode body is greater than the width of the region to which the electrode active material is applied, which hinders reduction in size of the battery.

EP 1 207 565 A2 A discloses battery comprising an electricity-generating element comprising a strip-form positive electrode, a strip-form negative electrode, and a strip-form separator. The positive electrode and the negative electrode are spirally wound through the separator and the positive electrode and the negative electrode respectively have current collecting lugs protruding from a side thereof, wherein the pitches of the current collecting lugs become longer toward the outer periphery side, and the at least one current collecting lug that is located on the outer side has a larger width than that located on the inner side. In this battery, the electricity-generating element has at least one current collecting lug which has a larger width than the adjacent current collecting lug located on the inner side thereof. Consequently, although the current collecting lugs in an outer region are located at a longer pitch and the area to be covered by each current collecting lug in that region is wide, charge/discharge current can sufficiently flow through the active material throughout the whole area in that region. Therefore, charge/discharge current can evenly flow through the electrodes including their inner and outer parts, whereby the active materials can have an even reaction distribution.

JP 8 022818 A discloses a large-sized alkaline storage battery which allows a large current. According to this state of the art a group of battery electrodes, where positive electrode boards and negative electrode boards are wound in spiral shape through separators, are accommodated in a bottomed cylindrical battery container. A plurality of projecting current-collecting plain parts or lugs not charged with active matter are formed at one edge each in the longitudinal direction of the positive electrode board and the negative electrode board, and the plural projecting current-collecting plain parts made at the positive electrode board and the negative electrode board are wound toward the same direction. They are accommodated, with the side of the projecting current-collecting plain parts directed toward the open side of the battery container. One polarity of projecting current-collecting plain parts are arranged within one semicircle being made by dividing circular end face on the open side of a group of battery electrodes, and the other polarity of projecting current-collecting plain parts are arranged within the other semicircle. A collector united with one polarity of terminal electrode pole is welded to a plurality of one-polarity projecting current-collecting plain parts arranged within one semicircle, and also a collector united with the other polarity of terminal electrode pole of the other polarity is welded to a plurality of other-polarity projecting current-collecting plain parts arranged within the other semicircle.

JP 2000 348757 A discloses to increase the width of a terminal by preventing the winding displacement of an electrode plate group in a storage battery having a spiral type electrode plate group, and a positive and negative electrode terminals at the same end of the electrode plate group. The ratio of the thickness of a separator to the sum of thicknesses of a positive electrode plate and a negative electrode plate constituting a spiral type electrode plate group is set to 0.17-0.33, the widths of terminal parts of the electrode plate group rolled after forming the plural terminal parts on the upper side of each of the electrode plates are gradually increased from its inside circumference to its outside circumference excluding the terminal parts on the outermost circumference, and the positive electrode terminal parts and the negative electrode terminal parts are arranged symmetrically with respect to the center axis of the electrode plate group.

### Disclosure of Invention

This invention has been made in consideration of these circumstances, and its object is to provide a rolled electrode battery, capable of ensuring extraction of a large current and reduction in size, and a method of manufacturing the same.

According to the invention the above object is achieved by a combination of features of claims 1 or 6. The dependent claims are directed to different advantageous aspects of the invention.

### Brief Description of Drawings

FIG. 1 is a cutaway perspective view showing a rolled electrode battery according to a first embodiment of this invention;
FIG. 2 is a sectional view of the rolled electrode battery;
FIG. 3 is a partially developed perspective view showing an electrode body of the rolled electrode battery;
FIG. 4 is a plan view of the electrode body;
FIG. 5 is a perspective view showing the electrode body;
FIG. 6 is a plan view showing a positive electrode plate and a negative electrode plate that constitute the electrode body;
FIG. 7 is a plan view schematically showing a manufacturing apparatus for manufacturing the electrode body;
FIG. 8 is a plan view showing an electrode body of a rolled electrode battery according to a second embodiment;
FIG. 9 is a perspective view showing the electrode body according to the second embodiment; and
FIG. 10 is a plan view showing a positive electrode plate and a negative electrode plate that constitute the electrode body according to the second embodiment.

### Best Mode for Carrying Out the Invention

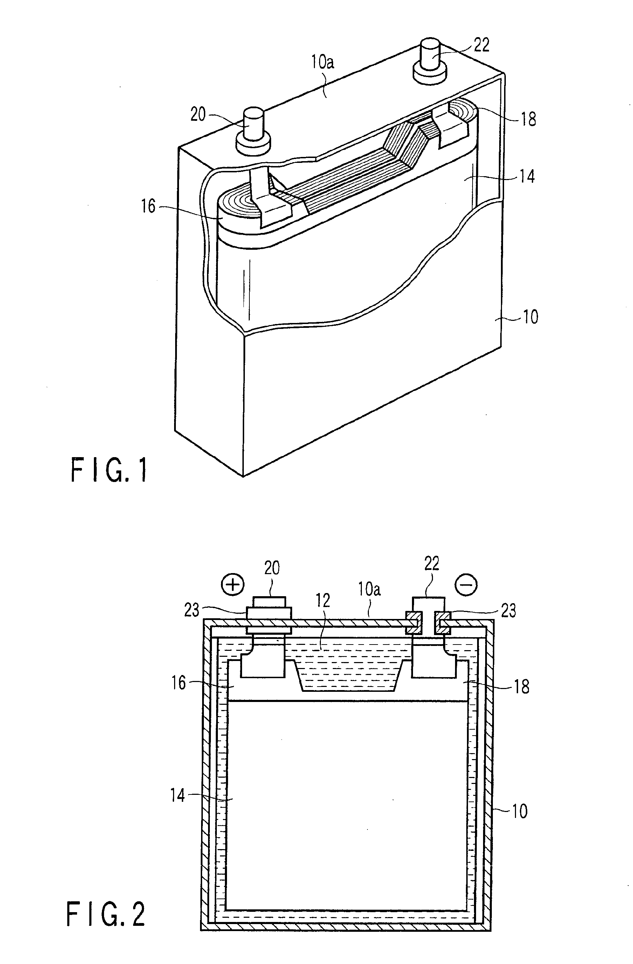

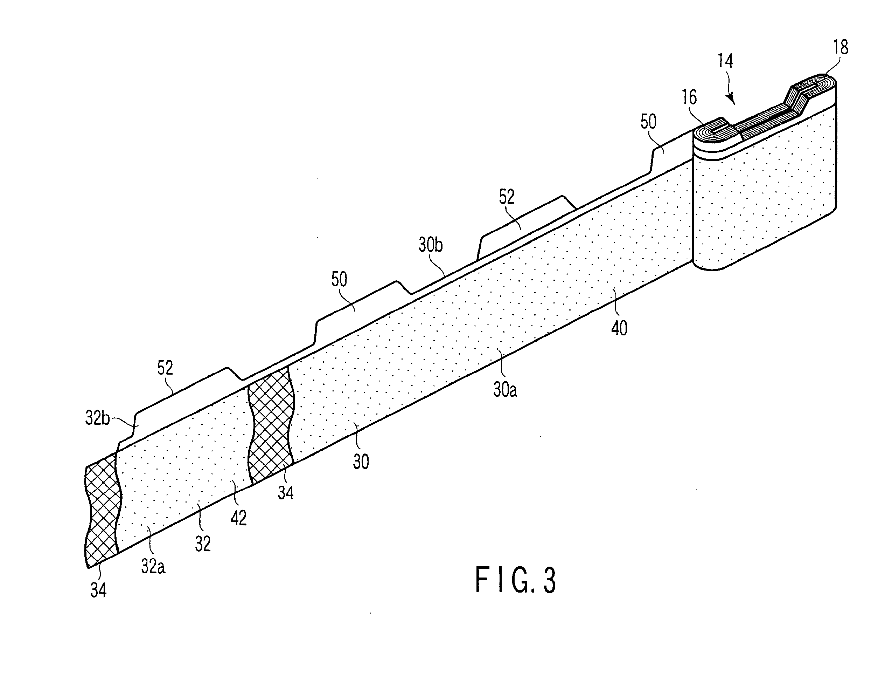

A rolled electrode battery according to a first embodiment of this invention will now be described in detail with reference to the drawing. FIG. 1 is a cutaway perspective view of the rolled electrode battery, FIG. 2 is a longitudinal sectional view of the rolled electrode battery, and FIG. 3 shows a laminate structure of an electrode plate along with a partially developed electrode body.

As shown in FIGS. 1 and 2, the rolled electrode battery is provided with a case or can 10 in the form of a flat rectangular box and a rolled electrode body 14 in the form of a flat cube that is contained together with an electrolyte solution 12 in the case. The electrode body 14 integrally includes a positive electrode tab 16 and a negative electrode tab 18 that protrude in the same direction along its axis. A positive electrode terminal 20 having a shaft portion is joined to the positive electrode tab 16, while a negative electrode terminal 22 having a shaft portion is joined to the negative electrode tab 18. The positive electrode terminal 20 and the negative electrode terminal 22 air-tightly penetrate a lid portion 10a of the case 10 and project outward. Further, the positive electrode terminal 20 and the negative electrode terminal 22 are mounted on the lid portion 10a through insulators, e.g., gaskets 23, provided on the lid portion 10a. Electric power that is generated in the electrode body 14 is extracted through the positive electrode tab 16, negative electrode tab 18, positive electrode terminal 20, and negative electrode terminal 22.

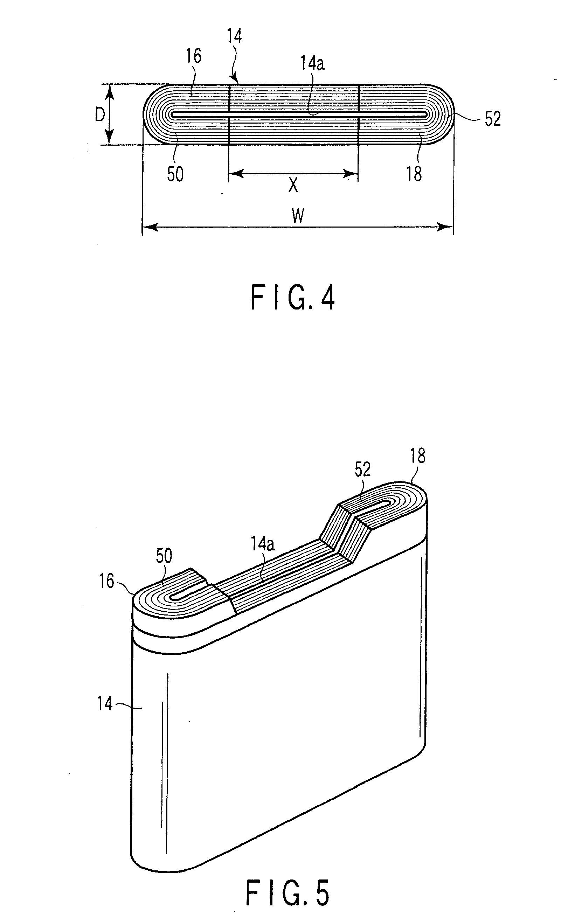

As shown in FIGS. 3, 4 and 5, the rolled electrode body 14 is formed into a flat shape in such a manner that a band-shape positive electrode plate 30, a band-shaped negative electrode plate 32, and a separator 34 interposed between the two electrode plates are rolled. The positive electrode tab 16 and the negative electrode tab 18 of the electrode body 14 are formed by laminating together a plurality of lugs that constitute a part of the positive electrode plate 30 and laminating together a plurality of lugs that constitute a part of the negative electrode plate 32, and project in the same direction from one axial end side of the electrode body 14.

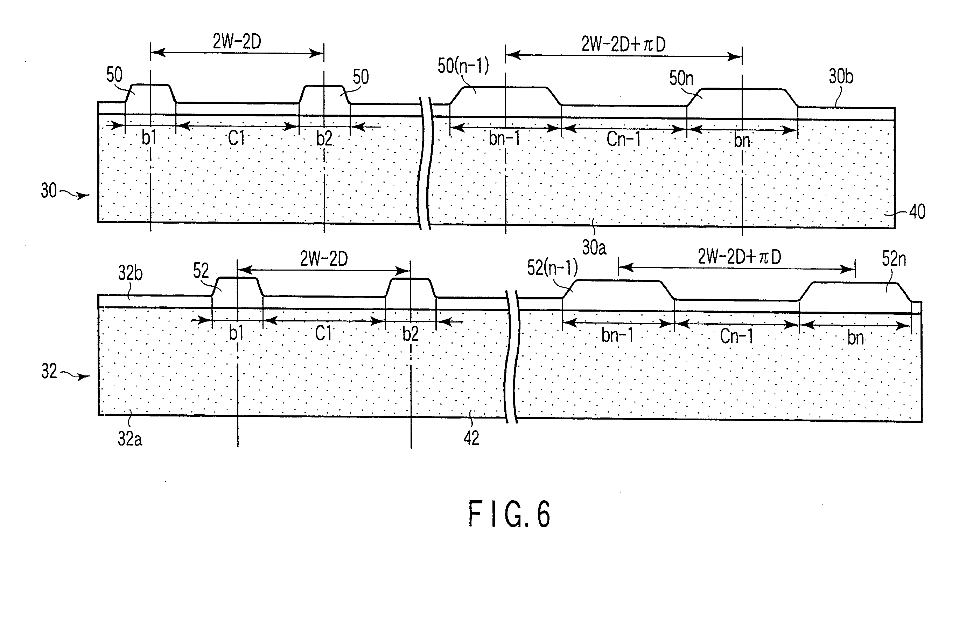

As shown in FIGS. 3 and 6, the positive electrode plate 30 is formed of an electrically-conductive metal foil, e.g., a band-shaped aluminum sheet 65 mm wide and 4m long, and a positive electrode active material layer 40 is formed on each surface of the positive electrode plate. The positive electrode active material layer 40 is formed to be band-shape, covering the overall length of the positive electrode plate 30, and no positive electrode active material layer is formed on one transverse end portion of the positive electrode plate, that is, one side edge portion of the positive electrode plate. Thus, the positive electrode plate 30 includes an electrode portion 30a on which the positive electrode active material layer 40 is formed and a side edge portion 30b on which no positive electrode active material layer is formed. The side edge portion 30b is formed to have a width of, for example, 10 mm from an end edge of the positive electrode plate 30. For example, lithium-manganese oxide is used as a positive electrode active material.

The side edge portion 30b of the positive electrode plate 30 is intermittently cut at intervals along the length of the positive electrode plate to form a plurality of, e.g., a number, n, of trapezoidal lugs 50. The lugs 50 are arranged at intervals C(1∼n) along the length of the positive electrode plate 30, that is, with notches between them, and these intervals are gradually extended. Widths b(1∼n) of the lugs 50 along the length of the positive electrode plate 30 are gradually extended from the lug that is situated on one end side of the positive electrode plate, that is, the lug that is situated on the one end side on the side of the center of the turns of the electrode body 14, toward the lug that is situated on the other end side of the positive electrode plate.

If the width of the rolled electrode body 14 and the distance between the positive electrode tab 16 and the negative electrode tab 18 are W and x, respectively, a width b1 of the smallest-width lug 50 that is situated at the one end of the positive electrode plate 30 is adjusted to (W - D - x), and a width bn of the largest-width lug 50n that is situated at the other end of the positive electrode plate 30 is adjusted to (b1 + nD/2).

Among the intervals between the centers of the adjacent lugs 50, moreover, the interval between the centers of the two adjacent lugs 50 that are situated on the extreme one end side of the positive electrode plate 30 is adjusted to (2W - 2D), and that between the centers of the two lugs 50 that are situated on the extreme other end side of the positive electrode plate 30 is adjusted to (2W - 2D + nD).

Among the intervals C(1∼n) between the adjacent lugs 50, the interval C1 between the two adjacent lugs 50 that are situated on the extreme one end side of the positive electrode plate 30 is adjusted to (W - D + x), and the interval Cn-1 between the two lugs 50 that are situated on the extreme other end side of the positive electrode plate 30 is adjusted to approximately (C1 + nD/2).

The negative electrode plate 32 is formed of an electrically-conductive metal foil, e.g., a band-shaped copper sheet 65 mm wide and 4m long, and a negative electrode active material layer 42 is formed on each surface of the negative electrode plate. The negative electrode active material layer 42 is formed to be band-shape, covering the overall length of the negative electrode plate, and no negative electrode active material layer is formed on one transverse end portion of the negative electrode plate, that is, one side edge portion of the negative electrode plate. Thus, the negative electrode plate 32 includes an electrode portion 32a on which the negative electrode active material layer 42 is formed and a side edge portion 32b on which no electrode active material layer is formed. The side edge portion 32b is formed to have a width of 10 mm from an end edge of the negative electrode plate 32. For example, carbon is used as a negative electrode active material.

The side edge portion 32b of the negative electrode plate 32 is intermittently cut at intervals along the length of the negative electrode plate to form a plurality of, e.g., a number n of trapezoidal lugs 52. The lugs 52 are arranged at the intervals C(1∼n) along the length of the negative electrode plate 32, that is, with notches between them, and these intervals are gradually extended. Widths b(1∼n) of the lugs 52 along the length of the negative electrode plate 32 are gradually extended from the lug that is situated on one end side of the negative electrode plate toward the lug that is situated on the other end side of the negative electrode plate.

A width b1 of the smallest-width lug 52 that is situated at the one end of the negative electrode plate 32 is adjusted to (W - D - x), and a width bn of the largest-width lug 52n that is situated at the other end of the negative electrode plate 32 is adjusted to (b1 + nD/2). Among the intervals between the centers of the adjacent lugs 52, the interval between the centers of the two adjacent lugs 52 that are situated on the extreme one end side of the negative electrode plate 32 is adjusted to (2W - 2D), and that between the centers of the two lugs 52 that are situated on the extreme other end side of the negative electrode plate 32 is adjusted to (2W - 2D + nD).

Among the intervals C between the adjacent lugs 52, the interval C1 between the two adjacent lugs 52 that are situated on the extreme one end side of the negative electrode plate 32 is adjusted to (W - D + x), and the interval Cn-1 between the two lugs 52 that are situated on the extreme other end side of the negative electrode plate 32 is adjusted to approximately (C1 + nD/2).

The separator 34 is formed of a band of polyethylene or polypropylene 55 mm wide and 4.4m long. The separator 34 is formed with a width substantially equal to those of the electrode portions 30a and 32b on which the electrode active material layers 40 and 42 of the electrode plates 30 and 32 are formed, respectively, and a length greater than that of the electrode plates.

As shown in FIGS. 3 to 6, the separator 34 is located between the electrode portion 30a of the positive electrode plate 30 and the electrode portion 32a of the negative electrode plate 32 so as to be in contact with them. The positive electrode plate 30 and the negative electrode plate 32 are superposed so that their side edge portions 30b and 32b project in the same direction from the separator 34 and also that the lugs 50 of the positive electrode plate 30 and the lugs 52 of the negative electrode plate 32 are superposed to be alternately situated along the lengths of the two electrode plates.

The flat electrode body 14 is formed by rolling the positive electrode plate 30, separator 34, negative electrode plate 32, and separator 34 so as to be turned back at respective central portions of the lugs 50 and 52. Further, the plurality of lugs 50 of the positive electrode plate 30 are laminated to one another in the radial direction of the electrode body to form the positive electrode tab 16 that is integral with the electrode body 14. Furthermore, the plurality of lugs 52 of the negative electrode plate 32 are laminated to one another in the radial direction of the electrode body to form the negative electrode tab 18 that is integral with the electrode body 14.

The electrode body 14 has a flat shape such that its outer peripheral shape is spread transversely. Further, the electrode body 14 has, in its central part, a flat hollow portion 14a that is defined by the innermost peripheral surface of the electrode body. The electrode body 14 may be either an electrode body such that the positive electrode plate 30 and the negative electrode plate 32 are rolled into a flat shape with the separator between them or one that is deformed into a flat shape after the positive electrode plate and the negative electrode plate are rolled with the separator between them.

The positive electrode tab 16 and the negative electrode tab 18 are situated individually at the opposite end portions of the electrode body 14 in the direction of the width W thereof and are spaced at the distance x from each other. Preferably, the plurality of lugs 50 that constitute the positive electrode tab 16 are bonded together in such a manner that they are compressed in the direction of lamination. Likewise, the plurality of lugs 52 that constitute the negative electrode tab 18 are preferably bonded together in such a manner that they are compressed in the direction of lamination.

As shown in FIGS. 1 and 2, the electrode body 14 constructed in this manner is contained in the case 10, and its positive and negative electrode tabs 16 and 18 are situated opposite the lid portion 10a of the case. The positive electrode terminal 20 is formed of, for example, aluminum, while the negative electrode terminal 22 is formed of, for example, a copper alloy. The positive electrode terminal 20 and the negative electrode terminal 22 are bonded to the positive electrode tab 16 and the negative electrode tab 18, respectively, of the electrode body 14. The bonding is performed by, for example, welding.

The case 10 is a tank-like container of aluminum, iron, or stainless steel that can be internally sealed. The electrolyte solution 12 used is, for example, a solution that is formed by adding LiPF₆ to a solvent mixture of ethylene carbonate and diethylene carbonate.

The following is a description of a method for manufacturing the rolled electrode battery provided with the electrode body 14 constructed in this manner.

The rolled electrode battery can be manufactured by forming the rolled electrode body 14 that includes the positive electrode plate 30 and the negative electrode plate 32 rolled with the separator therebetween, welding the positive electrode terminal 20 and the negative electrode terminal 22 to the positive electrode tab 16 and the negative electrode tab 18, respectively, of the electrode body 14, and then sealing the electrode body together with the electrolyte solution 12 into the case 10.

The following is a detailed description of a method for manufacturing the electrode body 14.

First, the positive electrode plate 30 is formed having the positive electrode active material layer 40 on each surface of the band-shaped aluminum sheet. In forming the positive electrode plate 30, a paste mixture that contains a positive electrode active material is applied to a surface of the band-shaped aluminum sheet, dried, and then pressure-bonded by means of a press. Further, the negative electrode plate 32 that includes the negative electrode active material layer 42 on each surface of the band-shaped copper sheet is formed in the same manner as the positive electrode plate.

Subsequently, the active material layer is removed from respective end portions of the positive electrode plate 30 and the negative electrode plate 32 on their one transverse side to form the side edge portions 30b and 32b to which no positive electrode active material is applied and through which the electrically-conductive sheet is exposed. Thereafter, the positive electrode plate 30 and the negative electrode plate 32 are rolled with the separator 43 between them.

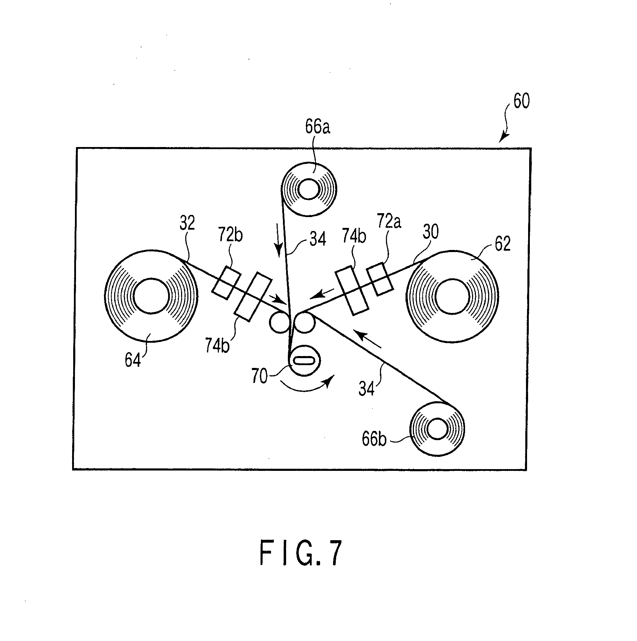

In this case, the rolling is performed by using a rolling device shown in FIG. 7. Specifically, the positive electrode plate 30 formed in the above-described manner is rolled around a first reel 62 of the rolling device, while the negative electrode plate 32 is rolled around a second reel 64. Likewise, the two band-shaped separators 34 are wound individually around a third reel 66a and a fourth reel 66b to form rolls of the separators.

Then, the positive electrode plate 30, negative electrode plate 32, and separators 34 are drawn out individually from the first to fourth reels 62, 64, 66a and 66b, and they are superposed on one another and wound around a take-up hub 70. As this is done, the side edge portion 30b of the positive electrode plate 30 drawn out from the first reel 62 is intermittently cut by means of a cutter 72a, whereupon the plurality of lugs 50 are formed arranged at predetermined intervals. After dust, chips, etc., produced by the cutting are then removed from the positive electrode plate 30 by a dust collector 74a, the positive electrode plate is wound around the take-up hub 70. Likewise, the side edge portion 32b of the negative electrode plate 32 drawn out from the second reel 64 is intermittently cut by means of a cutter 72b, whereupon the plurality of lugs 52 are formed arranged at predetermined intervals. After dust, chips, etc., produced by the cutting are then removed from the negative electrode plate 32 by a dust collector 74b, the negative electrode plate is wound around the take-up hub 70.

As the take-up hub 70 is then rotated, the positive electrode plate 30 and the negative electrode plate 32 are wound up on the take-up hub 70 in such a manner that they are superposed so that their side edge portions 30b and 32b project in the same direction from the separators 34 and also that the lugs 50 of the positive electrode plate 30 and the lugs 52 of the negative electrode plate 32 are superposed to be alternately situated along the lengths of the two electrode plates.

The take-up hub 70 is formed with a flat oval cross-sectional shape, and the positive electrode plate 30, separator 34, negative electrode plate 32, and separator 34 are rolled around the hub 70 so as to be turned back at respective central portions of the lugs 50 and 52. After the electrode body 14 is formed by rolling these plates for a predetermined length, the positive electrode plate 30, negative electrode plate 32, and separators 34 are cut. Subsequently, the resulting roll is removed from the take-up hub 70, and this roll is stamped into a flat shape. Thus, the electrode body 14 is obtained that integrally includes the positive electrode tab 16 and the negative electrode tab 18.

Thereafter, the positive electrode terminal 20 and the negative electrode terminal 22 are ultrasonically bonded to the positive electrode tab 16 and the negative electrode tab 18, respectively, which projects on the one axial end side of the electrode body 14. Electric welding, such as spot welding, seam welding, etc., ultrasonic welding, or the like may be used as a method for bonding the electrode terminals and the tabs. Then, the electrode body 14, including the positive electrode terminal 20 and the negative electrode terminal 22 thus bonded, is put into the case 10. After the lid portion 10a is closed to seal the case, the electrolyte solution 12 is injected into the case 10 through an inlet (not shown). The electrode battery is completed when the inlet is then sealed.

With the rolled electrode battery according to the present embodiment constructed in this manner, the electrode body includes the positive electrode tab and the negative electrode tab formed by laminating the plurality of lugs that are formed of parts of the electrode plates. Thus, the positive electrode tab and the negative electrode tab are formed of the electrode plates themselves, so that there are no such junctions as conventional ones between independent tabs and electrode plates. Even if a large current flows, therefore, overheating/burning cannot be caused. Since each tab is formed by laminating the plurality of lugs, moreover, a large current can be extracted as in the case where a plurality of independent tabs are joined. When compared with the case where the plurality of independent tabs are joined, moreover, the overall thickness of each tab can be reduced, so that the entire electrode body can be reduced in size.

Further, the positive electrode plate and the negative electrode plate are constructed so that their side edge portions project only on one side of the separator and that half or more of each side edge portion is cut. Thus, the overall volume of the electrode body can be reduced to ensure compactification.

In consequence, a rolled electrode battery can be obtained that ensures extraction of a large current and reduction in size.

According to the method of manufacturing the rolled electrode battery according to the present embodiment, furthermore, the tabs are formed of the electrode plates themselves. In contrast with the conventional case, therefore, the electrode body can be efficiently manufactured without requiring a plurality of independent tabs to be welded to the electrode plates. Since each lug has the shape of a trapezoid or the like that has inclined sides, the electrode body can be continuously cut with ease by means of a cutter or laser cutter. Thus, the electrode body can be manufactured efficiently.

The lugs may be formed by punching the side edge portions of the electrode plates with a press or the like, instead of cutting out with a cutter. In this case, the lugs may be formed after the electrode active material layers are formed on the electrode plates, or alternatively, the electrode active material layers may be formed on the electrode plates after the lugs are formed.

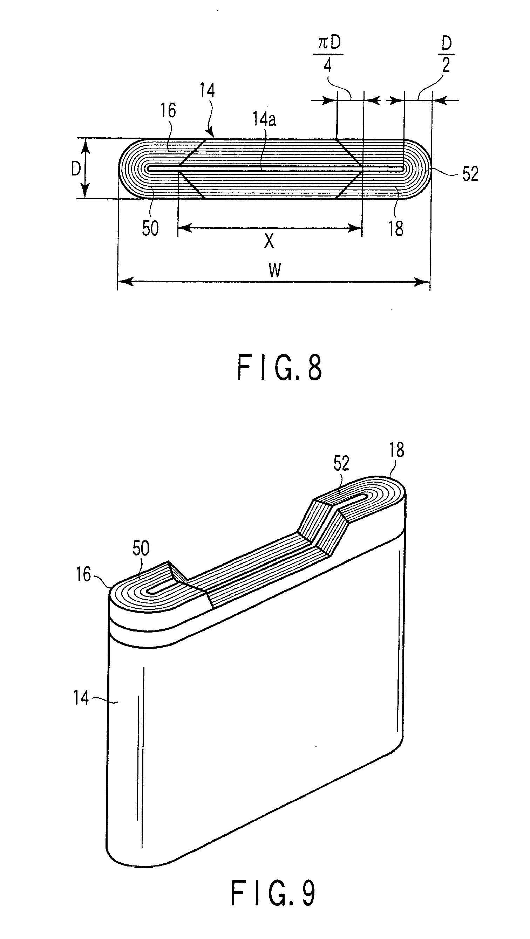

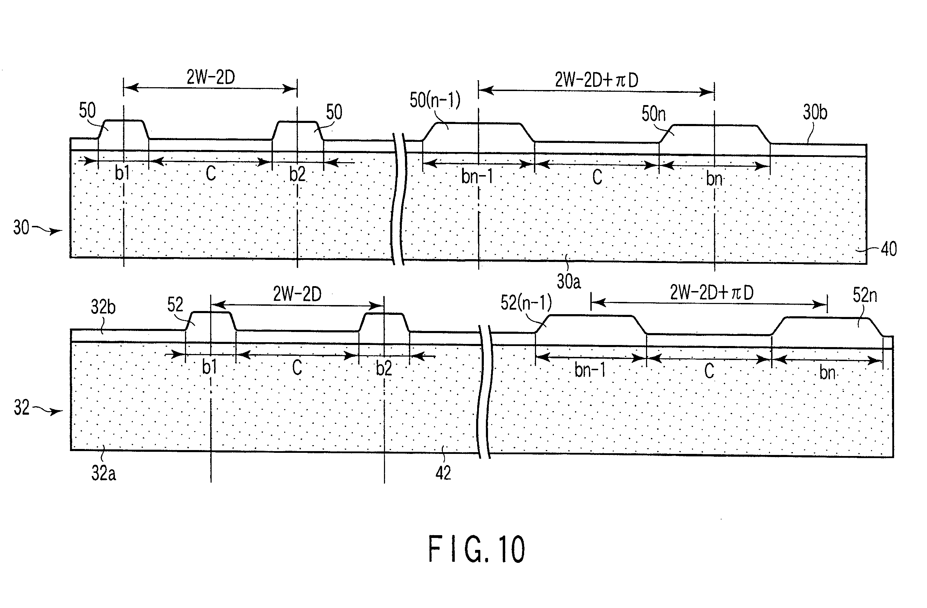

With a rolled electrode battery according to a second embodiment, lugs of an electrode body 14 are formed by means of a press. As shown in FIGS. 8 to 10, in this case, intervals C1 to Cn-1 between lugs 50 of a positive electrode plate 30 are adjusted to a constant value C, and intervals C1 to Cn-1 between lugs 52 of a negative electrode plate 32 are also adjusted to the constant value C. Further, a width b1 of the smallest-width lugs 50 and 52 that are situated at one ends of the positive electrode plate 30 and the negative electrode plate 32 is adjusted to (W - D - x), and a width bn of the largest-width lugs 50 and 52n that are situated at the other ends of the positive electrode plate and the negative electrode plate is adjusted to (bn + 2b1 + nD).

A positive electrode tab 16 and a negative electrode tab 18 are formed based on the lugs 50 and 52 by rolling the positive electrode plate 30 and the negative electrode plate 32 described above to form the electrode body 14. These positive and negative electrode tabs 16 and 18 have bent end edge portions, individually.

The same function and effect of the foregoing first embodiment can also be obtained with the second embodiment constructed in this manner. Further, the lugs of the electrode plates can be easily formed by means of a press by equalizing the intervals between the lugs.

This invention is not limited to the embodiments described above, and in carrying out the invention, its components may be embodied in modified forms without departing from the invention. Further, various inventions may be made by suitably combining a plurality of components disclosed in connection with the foregoing embodiments. Some of all the components according to the embodiments may be omitted, or components according to different embodiments may be combined as required.

For example, the shape and size of the electrode body, the shape and size of lugs, etc., are not limited to the foregoing embodiments and may be suitably modified. The material of the electrode plates, the electrode active material, and the electrolyte solution are not limited to the foregoing embodiments and may be variously selected as required.

### Industrial Applicability

According to an aspect of the present invention, there may be provided a rolled electrode battery configured so that a plurality of lugs that constitute parts of a positive electrode plate and a negative electrode plate are laminated to one another to form electrode tabs, whereby extraction of a large current and reduction in size can be ensured, and a manufacturing method therefor.

## Claims

1. A rolled electrode battery comprising:
a rolled electrode body (14) including a band-shaped positive electrode plate (30) and a band-shaped negative electrode plate (32) formed individually with electrode active material layers (40), which are rolled with a band-shaped separator (34) interposed between the positive and negative electrode plates (30, 32); and
a case (10) which contains the electrode body (14) and
an electrolyte solution therein and on which a positive electrode terminal (20) and a negative electrode terminal (22) are provided,
the positive electrode plate (30) and the negative electrode plate (32) each including a band-shaped electrode portion formed with the electrode active material layer and contacting the separator (34), a side edge portion projecting from the separator (34) to one axial side of the electrode body and not formed with an electrode active material layer (40), the side edge portion forming a plurality of lugs (50, 52) arranged at intervals along the lengths of the positive electrode plate (30) and the negative electrode plate (32),
the positive electrode plate (30) and the negative electrode plate (32) being rolled in layers so that the plurality of lugs (50) of the positive electrode plate (30) are laminated to one another to form a positive electrode tab (16) and that the plurality of lugs (52) of the negative electrode plate (32) are laminated to one another to form a negative electrode tab (18);
the electrode body (14) being formed into a flat shape having a width and thickness and turned back at respective central portions of the lugs (50, 52), the positive electrode tab (16) and negative electrode tab (18) projecting in the same direction along the axis of the electrode body from one axial end side of the electrode body and being situated individually at the opposite end portions of the electrode body in the direction of the width thereof, the positive electrode terminal (20) and the negative electrode terminal (22) being connected to the positive electrode tab (16) and the negative electrode tab (18), respectively,
wherein widths of the lugs (50, 52) along the lengths of the positive electrode plate (30) and the negative electrode plate (32) are gradually extended from the lug situated on one end side of the positive electrode plate (30) and the negative electrode plate (32) toward the lug (50, 52) situated on the other end side of the positive electrode plate (30) and the negative electrode plate (32).

2. The rolled electrode battery according to claim 1, wherein the plurality of lugs (50, 52) of the positive electrode plate (30) and the negative electrode plate (32) are formed in trapezoidal.

3. The rolled electrode battery according to claim 1 or 2, wherein the plurality of lugs (50, 52) of the positive electrode plate (30) and the negative electrode plate (32) are provided at a predetermined interval along the lengths of the positive electrode plate (30) and the negative electrode plate (32).

4. The rolled electrode battery according to any of claims 1 to 3, wherein the plurality of lugs (50, 52) are laminated radially of the electrode body to form the tabs (16, 18).

5. The rolled electrode battery according to any of claims 1 to 4, wherein the positive electrode plate (30) and the negative electrode plate (32) are rolled in layers so that the plurality of lugs (50) of the positive electrode plate (30) and the plurality of lugs (52) of the negative electrode plate (32) are alternately situated along the lengths of the positive electrode plate (30) and the negative electrode plate (32) .

6. A method of manufacturing a rolled electrode battery comprising a rolled electrode body including a band-shaped positive electrode plate and a band-shaped negative electrode plate formed individually with electrode active material layers, which are rolled with a band-shaped separator interposed between the positive and negative electrode plates and formed into a flat shape; and a case which contains the electrode body and an electrolyte solution therein and on which a positive electrode terminal and a negative electrode terminal are provided; the method comprising:
applying an electrode active material to a band-shaped metal film to form a band-shaped positive electrode plate and a band-shaped negative electrode plate each of which includes a band-shaped electrode portion formed with an electrode active material layer and a side edge portion to which the
electrode active material is not applied;
intermittently cutting out the side edge portion of the positive electrode plate along the length of the positive electrode plate, thereby forming a plurality of lugs arranged at a side edge at intervals along the length of the positive electrode plate, wherein widths of the first lugs along the length of the positive electrode plate are gradually extended from the first lug situated on one end side of the positive electrode plate toward the first lug situated on the other end side of the positive electrode plate;
intermittently cutting out the side edge portion of the negative electrode plate along the length of the positive electrode plate, thereby forming a plurality of lugs arranged at a side edge at intervals along the length of the negative electrode plate, wherein widths of the second lugs along the length of the negative electrode plate are gradually extended from the second lug situated on one end side of the negative electrode plate toward the second lug situated on the other end side of the negative electrode plate;
rolling the positive electrode plate and the negative electrode plate, which are formed with the plurality of lugs, with the band-shaped separator being interposed between the positive electrode plate and the negative electrode plate and contacting the electrode material layers, thereby forming the electrode body;
laminating the plurality of lugs of the positive electrode plate to form a positive electrode tab and laminating the plurality of lugs of the negative electrode plate to form a negative electrode tab; and
forming the electrode body into a flat shape having a width and thickness and turning back at respective central portions of the lugs, such that the positive electrode tab and negative electrode tab projecting in the same direction along the axis of the electrode body from one axial end side of the electrode body and being situated individually at the opposite end portions of the electrode body in the direction of the width thereof.

7. The method of manufacturing a roiled electrode battery according to claim 6, wherein the first and second plurality of lugs of the positive electrode plate and the negative electrode plate are provided at a constant interval along the lengths of the positive electrode plate and the negative electrode plate.

8. The method of manufacturing method a rolled electrode battery according to claim 6 or 7, wherein the plurality of lugs are formed by intermittently cutting out the positive electrode plate and the negative electrode plate with a cutter.

9. The method of manufacturing a rolled electrode battery according to claim 6 or 7, wherein the plurality of lugs are formed by intermittently punching the side edge portions of the positive electrode plate and the negative electrode plate with a press.

## Patentansprüche

1. Gerollte Elektrodenbatterie, aufweisend:
ein gerollter Elektrodenkörper (14), der eine bandförmige positive Elektrodenplatte (30) und eine bandförmige negative Elektrodenplatte (32) umfasst, die individuell mit elektrodenaktiven Materialschichten (40) ausgebildet sind, welche mit einem bandförmigen Separator (34) gerollt sind, der zwischen der positiven und negativen Elektrodenplatte (30, 32) eingefügt ist; und
ein Gehäuse (10), welches den Elektrodenkörper (14) und eine elektrolytische Lösung darin enthält, und auf welchem ein positiver Elektrodenanschluss (20) und ein negativer Elektrodenanschluss (22) bereitgestellt sind,
wobei sowohl die positive Elektrodenplatte (30) als auch die negative Elektrodenplatte (32) einen bandförmigen Elektrodenabschnitt, der mit der elektrodenaktiven Materialschicht ausgebildet ist, umfasst und den Separator (34) kontaktiert, wobei ein Seitenkantenabschnitt aus dem Separator (34) zu einer axialen Seite des Elektrodenkörpers herausragt und nicht mit einer elektrodenaktiven Materialschicht (40) ausgebildet ist, wobei der Seitenkantenabschnitt eine Vielzahl an Schlaufen (50, 52) ausbildet, die in Intervallen entlang der Längen der positiven Elektrodenplatte (30) und der negativen Elektrodenplatte (32) angeordnet sind,
wobei die positive Elektrodenplatte (30) und die negative Elektrodenplatte (32) in Schichten gerollt werden, so dass die Vielzahl von Schlaufen (50) der positiven Elektrodenplatte (30) aneinander laminiert sind, um einen positiven Elektrodenstreifen (16) auszubilden, und dass die Vielzahl an Schlaufen (52) der negativen Elektrodenplatte (32) aneinander laminiert sind, um einen negativen Elektrodenstreifen (18) auszubilden;
wobei der Elektrodenkörper (14) in einer flachen Form mit einer Breite und einer Dicke und an jeweiligen zentralen Abschnitten der Schlaufen (50, 52) umgedreht ausgebildet ist, wobei der positive Elektrodenstreifen (16) und der negative Elektrodenstreifen (18) in dieselbe Richtung entlang der Achse des Elektrodenkörpers von einer axialen Endseite des Elektrodenkörpers herausragen, und an den gegenüberliegenden Endabschnitten des Elektrodenkörpers in der Richtung der Breite davon individuell angeordnet sind, wobei der positive Elektrodenanschluss (20) und der negative Elektrodenanschluss (22) jeweils mit dem positiven Elektrodenstreifen (16) und dem negativen Elektrodenstreifen (18) verbunden sind,
wobei sich Breiten der Schlaufen (50, 52) entlang der Längen der positiven Elektrodenplatte (30) und der negativen Elektrodenplatte (32) graduell von der auf einer Endseite der positiven Elektrodenplatte (30) und der negativen Elektrodenplatte (32) angeordneten Schlaufe in Richtung der auf der anderen Endseite der positiven Elektrodenplatte (30) und der negativen Elektrodenplatte (32) angeordneten Schlaufe (50, 52) erstrecken.

2. Gerollte Elektrodenbatterie nach Anspruch 1, wobei die Vielzahl an Schlaufen (50, 52) der positiven Elektrodenplatte (30) und der negativen Elektrodenplatte (32) in Trapezform ausgebildet sind.

3. Gerollte Elektrodenbatterie nach Anspruch 1 oder 2, wobei die Vielzahl an Schlaufen (50, 52) der positiven Elektrodenplatte (30) und der negativen Elektrodenplatte (32) in einem vorbestimmten Intervall entlang der Längen der positiven Elektrodenplatte (30) und der negativen Elektrodenplatte (32) bereitgestellt sind.

4. Gerollte Elektrodenbatterie nach einem der Ansprüche 1 bis 3, wobei die Vielzahl an Schlaufen (50, 52) radial von dem Elektrodenkörper laminiert sind, um die Streifen (16, 18) auszubilden.

5. Gerollte Elektrodenbatterie nach einem der Ansprüche 1 bis 4, wobei die positive Elektrodenplatte (30) und die negative Elektrodenplatte (32) in Schichten gerollt sind, so dass die Vielzahl an Schlaufen (50) der positiven Elektrodenplatte (30) und die Vielzahl an Schlaufen (52) der negativen Elektrodenplatte (32) alternierend entlang der Längen der positiven Elektrodenplatte (30) und der negativen Elektrodenplatte (32) angeordnet sind.

6. Verfahren zum Herstellen einer gerollten Elektrodenbatterie mit einem gerollten Elektrodenkörper, der eine bandförmige positive Elektrodenplatte und eine bandförmige negative Elektrodenplatte, die individuell mit elektrodenaktiven Materialschichten ausgebildet sind, welche mit einem bandförmigen Separator gerollt sind, der zwischen der positiven und der negativen Elektrodenplatte eingefügt ist und in einer flachen Form ausgebildet ist, und ein Gehäuse umfasst, welches den Elektrodenkörper und eine elektrolytische Lösung darin enthält, und auf welchem ein positiver Elektrodenanschluss und ein negativer Elektrodenanschluss bereitgestellt sind, aufweisend:
Anwenden eines elektrodenaktiven Materials auf einen bandförmigen Metallfilm, um eine bandförmige positive Elektrodenplatte und eine bandförmige negative Elektrodenplatte auszubilden, von welchen jede einen bandförmigen Elektrodenabschnitt, der mit einer elektrodenaktiven Materialschicht ausgebildet ist, und einen Seitenkantenabschnitt umfasst, bezüglich welchem das elektrodenaktive Material nicht angewendet wird;
periodisches Ausschneiden des Seitenkantenabschnitts der positiven Elektrodenplatte entlang der Länge der positiven Elektrodenplatte, wodurch eine Vielzahl an Schlaufen ausgebildet wird, die an einer Seitenkante in Intervallen entlang der Länge der positiven Elektrodenplatte angeordnet sind, wobei sich Breiten der ersten Schlaufen entlang der Länge der positiven Elektrodenplatte graduell von der ersten Schlaufe, die an einer Endseite der positiven Elektrodenplatte angeordnet ist, in Richtung der ersten Schlaufe, die an der anderen Endseite der positiven Elektrodenplatte angeordnet ist, erstrecken;
periodisches Ausschneiden des Seitenkantenabschnitts der negativen Elektrodenplatte entlang der Länge der positiven Elektrodenplatte, wodurch eine Vielzahl an Schlaufen ausgebildet wird, die an einer Seitenkante in Intervallen entlang der Länge der negativen Elektrodenplatte angeordnet sind, wobei sich Breiten der zweiten Schlaufen entlang der Länge der negativen Elektrodenplatte graduell von der zweiten Schlaufe, die an einer Endseite der negativen Elektrodenplatte angeordnet ist, in Richtung der zweiten Schlaufe, die an der anderen Endseite der negativen Elektrodenplatte angeordnet ist, erstrecken;
Rollen der positiven Elektrodenplatte und der negativen Elektrodenplatte, welche mit der Vielzahl an Schlaufen ausgebildet sind, wobei der bandförmige Separator zwischen der positiven Elektrodenplatte und der negativen Elektrodenplatte eingefügt sind und die Elektrodenmaterialschichten kontaktieren, wodurch der Elektrodenkörper ausgebildet wird;
Laminieren der Vielzahl an Schlaufen der positiven Elektrodenplatte, um einen positiven Elektrodenstreifen auszubilden, und Laminieren der Vielzahl an Schlaufen der negativen Elektrodenplatte, um einen negativen Elektrodenstreifen auszubilden; und
Ausbilden des Elektrodenkörpers in einer flachen Form mit einer Breite und einer Dicke und Umdrehen an jeweiligen zentralen Abschnitten der Schlaufen derart, dass der positive Elektrodenstreifen und der negative Elektrodenstreifen in dieselbe Richtung entlang der Achse des Elektrodenkörpers von einer axialen Endseite des Elektrodenkörpers herausragen und individuell an den gegenüberliegenden Endabschnitten des Elektrodenkörpers in der Richtung der Breite davon angeordnet sind.

7. Verfahren zum Herstellen einer gerollten Elektrodenbatterie nach Anspruch 6, wobei die erste und die zweite Vielzahl an Schlaufen der positiven Elektrodenplatte und der negativen Elektrodenplatte in einem konstanten Intervall entlang der Längen der positiven Elektrodenplatte und der negativen Elektrodenplatte bereitgestellt werden.

8. Verfahren zum Herstellen einer gerollten Elektrodenbatterie nach Anspruch 6 oder 7, wobei die Vielzahl an Schlaufen durch periodisches Ausschneiden der positiven Elektrodenplatte und der negativen Elektrodenplatte mit einem Schneider ausgebildet werden.

9. Verfahren zum Herstellen einer gerollten Elektrodenbatterie nach Anspruch 6 oder 7, wobei die Vielzahl an Schlaufen durch periodisches Ausstanzen der Seitenkantenabschnitte der positiven Elektrodenplatte und der negativen Elektrodenplatte mit einer Presse ausgebildet werden.

## Revendications

1. Batterie à électrodes de type enroulé comprenant :
un corps d'électrode enroulé (14) incluant une plaque d'électrode positive en forme de bande (30) et une plaque d'électrode négative en forme de bande (32) munies chacune de couches de matériau actif d'électrode (40), qui sont enroulées avec un séparateur en forme de bande (34) interposé entre les plaques d'électrode positive et négative (30, 32) ; et
un boîtier (10) qui contient le corps d'électrode (14) et une solution d'électrolyte à l'intérieur et sur lequel sont prévues une borne d'électrode positive (20) et une borne d'électrode négative (22),
la plaque d'électrode positive (30) et la plaque d'électrode négative (32) incluant chacune une partie d'électrode en forme de bande munie de la couche de matériau actif d'électrode et en contact avec le séparateur (34), une partie de bord latéral se projetant depuis le séparateur (34) jusqu'à une face axiale du corps d'électrode et qui n'est pas munie d'une couche de matériau actif d'électrode (40), la partie de bord latéral formant une pluralité de cosses (50, 52) agencées par intervalles sur les longueurs de la plaque d'électrode positive (30) et de la plaque d'électrode négative (32),
la plaque d'électrode positive (30) et la plaque d'électrode négative (32) étant enroulées en couches de telle sorte que la pluralité de cosses (50) de la plaque d'électrode positive (30) sont déposées les unes au-dessus des autres de manière à former une patte d'électrode positive (16) et que la pluralité de cosses (52) de la plaque d'électrode négative (32) sont déposées les unes au-dessus des autres de manière à former une patte d'électrode négative (18) ;
le corps d'électrode (14) étant conformé en une forme plate ayant une largeur et une épaisseur et rabattu dans des parties centrales respectives des cosses (50, 52), la patte d'électrode positive (16) et la patte d'électrode négative (18) se projetant dans la même direction le long de l'axe du corps d'électrode depuis une face d'extrémité axiale du corps d'électrode et étant situées individuellement dans les parties d'extrémités opposées du corps d'électrode dans la direction de sa largeur, la borne d'électrode positive (20) et la borne d'électrode négative (22) étant respectivement connectées à la patte d'électrode positive (16) et à la patte d'électrode négative (18),
dans laquelle les largeurs des cosses (50, 52) sur les longueurs de la plaque d'électrode positive (30) et de la plaque d'électrode négative (32) s'étendent progressivement depuis la cosse située sur une face d'extrémité de la plaque d'électrode positive (30) et de la plaque d'électrode négative (32) vers la cosse (50, 52) située sur l'autre face d'extrémité de la plaque d'électrode positive (30) et de la plaque d'électrode négative (32).

2. Batterie à électrodes de type enroulé selon la revendication 1, dans laquelle la pluralité de cosses (50, 52) de la plaque d'électrode positive (30) et de la plaque d'électrode négative (32) sont formées de manière trapézoïdale.

3. Batterie à électrodes de type enroulé selon la revendication 1 ou 2, dans laquelle la pluralité de cosses (50, 52) de la plaque d'électrode positive (30) et de la plaque d'électrode négative (32) sont disposées par intervalles prédéterminés sur les longueurs de la plaque d'électrode positive (30) et de la plaque d'électrode négative (32).

4. Batterie à électrodes de type enroulé selon l'une quelconque des revendications 1 à 3, dans laquelle la pluralité de cosses (50, 52) sont déposées radialement par rapport au corps d'électrode afin de former les pattes (16, 18).

5. Batterie à électrodes de type enroulé selon l'une quelconque des revendications 1 à 4, dans laquelle la plaque d'électrode positive (30) et la plaque d'électrode négative (32) sont enroulées en couches de telle sorte que la pluralité de cosses (50) de la plaque d'électrode positive (30) et la pluralité de cosses (52) de la plaque d'électrode négative (32) sont disposées alternativement sur les longueurs de la plaque d'électrode positive (30) et de la plaque d'électrode négative (32).

6. Procédé de fabrication d'une batterie à électrodes de type enroulé comprenant un corps d'électrode enroulé incluant une plaque d'électrode positive en forme de bande et une plaque d'électrode négative en forme de bande munies chacune de couches de matériau actif d'électrode, qui sont enroulées avec un séparateur en forme de bande interposé entre les plaques d'électrode positive et négative et conformé en une forme plate ; et un boîtier qui contient le corps d'électrode et une solution d'électrolyte à l'intérieur et sur lequel sont prévues une borne d'électrode positive et une borne d'électrode négative, le procédé comprenant :
l'application d'un matériau actif d'électrode sur un film métallique en forme de bande pour former une plaque d'électrode positive en forme de bande et une plaque d'électrode négative en forme de bande incluant chacune une partie d'électrode en forme de bande munie de la couche de matériau actif d'électrode et une partie de bord latéral à laquelle le matériau actif d'électrode n'est pas appliqué ;
le découpage par intermittence de la partie de bord latéral de la plaque d'électrode positive sur la longueur de la plaque d'électrode positive, de manière à former une pluralité de cosses agencées sur le bord latéral par intervalles sur la longueur de la plaque d'électrode positive, où les largeurs des premières cosses sur la longueur de la plaque d'électrode positive s'étendent progressivement depuis la première cosse située sur une face d'extrémité de la plaque d'électrode positive vers la première cosse située sur l'autre face d'extrémité de la plaque d'électrode positive ;
le découpage par intermittence de la partie de bord latéral de la plaque d'électrode positive sur la longueur de la plaque d'électrode positive, de manière à former une pluralité de cosses agencées sur le bord latéral par intervalles sur la longueur de la plaque d'électrode négative, où les largeurs des secondes cosses sur la longueur de la plaque d'électrode négative s'étendent progressivement depuis la seconde cosse située sur une face d'extrémité de la plaque d'électrode négative vers la seconde cosse située sur l'autre face d'extrémité de la plaque d'électrode négative ;
l'enroulement de la plaque d'électrode positive et de la plaque d'électrode négative qui sont munies de la pluralité de cosses, le séparateur en forme de bande étant interposé entre la plaque d'électrode positive et la plaque d'électrode négative et en contact avec les couches de matériau d'électrode, afin de former le corps d'électrode ;
le dépôt de la pluralité de cosses de la plaque d'électrode positive afin de former une patte d'électrode positive et le dépôt de la pluralité de cosses de la plaque d'électrode négative afin de former une patte d'électrode négative ; et
la conformation du corps d'électrode en une forme plate ayant une largeur et une épaisseur et le rabattement dans des parties centrales respectives des cosses, de façon que la patte d'électrode positive et la patte d'électrode négative se projettent dans la même direction le long de l'axe du corps d'électrode depuis une face d'extrémité axiale du corps d'électrode et soient situées individuellement dans les parties d'extrémités opposées du corps d'électrode dans la direction de sa largeur.

7. Procédé de fabrication d'une batterie à électrodes de type enroulé selon la revendication 6, dans lequel les première et seconde pluralités de cosses de la plaque d'électrode positive et de la plaque d'électrode négative sont disposées à intervalles constants sur les longueurs de la plaque d'électrode positive et de la plaque d'électrode négative.

8. Procédé de fabrication d'une batterie à électrodes de type enroulé selon la revendication 6 ou 7, dans lequel la pluralité de cosses sont formées par découpage par intermittence de la plaque d'électrode positive et de la plaque d'électrode négative au moyen d'un outil de coupe.

9. Procédé de fabrication d'une batterie à électrodes de type enroulé selon la revendication 6 ou 7, dans lequel la pluralité de cosses sont formées par poinçonnage par intermittence des parties d'extrémité latérale de la plaque d'électrode positive et de la plaque d'électrode négative avec une presse.
